# EUROPEAN PATENT APPLICATION

(11) **EP 4 507 116 A1**
(43) Date of publication of application: **12.02.2025**
(21) Application number: 23784289.3
(22) Date of filing: 04.04.2023
(51) Int. Cl.: H01M 50/559

(54) **BATTERY AND POWER CONSUMING DEVICE**

(30) Priority: 06.04.2022 CN 202220781677 U
(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Jacob, Reuben Ellis
(86) International application number: PCT/CN2023/086314
(87) International publication number: WO 2023/193726

(57) **Abstract**

The embodiments of the present application belong to the technical field of batteries. Provided are a battery and a power consuming device. The battery comprises: a battery cell comprising electrode terminals and a pressure relief mechanism, at least one of the electrode terminals and the pressure relief mechanism being arranged at a first end of the battery cell; and a first protective member, which is arranged at the first end and comprises a blocking portion for preventing the pressure relief mechanism from making contact with the electrode terminal when the pressure relief mechanism is actuated. The battery has a high safety.

## Description

### CROSS-REFERENCE TO RELATED APPLICATIONS

This application claims priority to Chinese Patent Application No. CN202220781677.3, filed on April 6, 2022 and entitled "BATTERY AND ELECTRICAL DEVICE", which is incorporated herein by reference in its entirety.

### TECHNICAL FIELD

This application relates to the technical field of batteries, and in particular, to a battery and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

In the development of battery technology, in addition to improving the battery performance, safety is non-negligible. Therefore, how to improve the safety of a battery is a pressing technical challenge in the battery technology.

### SUMMARY

This application provides a battery and an electrical device. The safety of the battery is relatively high.

This application is implemented through the following technical solutions:
According to a first aspect, this application provides a battery. The battery includes: a battery cell, where the battery cell includes electrode terminals and a pressure relief mechanism, and at least one of the electrode terminals and the pressure relief mechanism are disposed at a first end of the battery cell; and a first protection piece, disposed at the first end, where the first protection piece includes a blocking portion, and the blocking portion is configured to prevent the pressure relief mechanism from contacting the electrode terminals when the pressure relief mechanism is actuated.

In the battery according to an embodiment of this application, the blocking portion prevents the pressure relief mechanism from contacting the electrode terminal when the pressure relief mechanism is actuated, thereby reducing the risk of a short circuit between the pressure relief mechanism and the electrode terminal, improving the safety of the battery, and endowing the battery with relatively high safety.

According to some embodiments of this application, the first protection piece includes a protection piece body. A first positioning hole is created on the protection piece body. The first end is inserted into the first positioning hole. The blocking portion is disposed at the first positioning hole.

In the above technical solution, the first end is inserted into the first positioning hole. The blocking portion is disposed at the first positioning hole, thereby facilitating the assembling and positioning of the first protection piece and the battery cell, and ensuring that the blocking portion blocks the pressure relief mechanism from contacting the electrode terminal.

According to some embodiments of this application, the pressure relief mechanism is configured to flip over when an internal pressure or internal temperature of the battery cell reaches a threshold, and the blocking portion is configured to limit a flipping angle of the pressure relief mechanism.

In the above technical solution, the pressure relief mechanism is actuated by flipping. The blocking portion is located on a flipping path of the pressure relief mechanism, thereby being able to limit the flipping angle of the pressure relief mechanism, and in turn, reducing the risk of contact and short-circuiting between the pressure relief mechanism and the electrode terminal.

According to some embodiments of this application, two blocking portions are disposed at the first positioning hole, and the two blocking portions are spaced apart along a flip axis of the pressure relief mechanism.

In the above technical solution, two blocking portions are disposed at the first positioning hole to block the pressure relief mechanism at different positions, thereby producing a good blocking effect. In addition, the two blocking portions may be made relatively small in size to lessen the degree of obstructing the emissions of the pressure relief mechanism while ensuring a good blocking effect, thereby facilitating the pressure relief mechanism to release pressure.

According to some embodiments of this application, the blocking portion protrudes beyond a hole wall of the first positioning hole.

In the above technical solution, the blocking portion protrudes beyond the hole wall of the first positioning hole, thereby making it convenient to block the pressure relief mechanism and saving the assembling space.

According to some embodiments of this application, the battery includes a plurality of battery cells. A plurality of first positioning holes are created on the protection piece body. The plurality of first positioning holes correspond to the plurality of battery cells. The first end of each battery cell is inserted into a corresponding first positioning hole.

In the above technical solution, the protection piece body corresponds to a plurality of battery cells, thereby making the structure compact, and facilitating assembling and positioning of the plurality of battery cells.

According to some embodiments of this application, the blocking portion and the protection piece body are formed in one piece.

In the above technical solution, the blocking portion and the protection piece body are formed in one piece, thereby facilitating processing and ensuring sufficient strength of connection between the blocking portion and the protection piece body.

According to some embodiments of this application, along an axial direction of the first positioning hole, a projection of the blocking portion on the battery cell at least partially overlaps the pressure relief mechanism.

In the above technical solution, the projection of the blocking portion at least partially overlaps the pressure relief mechanism, so as to ensure that the blocking portion can block the pressure relief mechanism from contacting the electrode terminal.

According to some embodiments of this application, along an axial direction of the first positioning hole, a clearance exists between the blocking portion and the pressure relief mechanism.

In the above technical solution, a clearance exists between the blocking portion and the pressure relief mechanism, thereby ensuring a sufficient space for passing the emissions of the pressure relief mechanism, and facilitating the pressure relief mechanism to release pressure.

According to some embodiments of this application, along an axial direction of the first positioning hole, a projection of the blocking portion on the battery cell does not overlap the electrode terminal.

In the above technical solution, the projection of the blocking portion on the battery cell does not overlap the electrode terminal, thereby preventing the blocking portion from blocking the electrode terminal, and making it convenient to electrically connect the electrode terminal to other components (for example, a busbar component configured to connect two adjacent electrode terminals).

According to some embodiments of this application, the battery further includes a second protection piece. The second protection piece is disposed at a second end, opposite to the first end, of the battery cell.

In the above technical solution, the second protection piece is disposed at the second end. In other words, the second protection piece is disposed opposite to the first protection piece. The two protection pieces constrain the position of the battery cell from two opposite ends of the battery cell.

According to some embodiments of this application, the battery cell is cylindrical.

In the above technical solution, the battery cell is cylindrical, and the distance between the electrode terminal and the pressure relief mechanism is relatively short. The blocking portion occupies just a relatively small mounting space, thereby ensuring a compact structure of the battery.

According to a second aspect, this application provides an electrical device. The electrical device includes the battery disclosed in any one of the above embodiments.

Additional aspects and advantages of this application will be partly given in the following description, and a part thereof will become evident in the following description or will be learned in the practice of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery cell assembly according to some embodiments of this application;
FIG. 4 is a schematic exploded view of a battery cell according to some embodiments of this application;
FIG. 5 is a schematic structural diagram of a first protection piece according to some embodiments of this application;
FIG. 6 is a close-up view of a part A shown in FIG. 5;
FIG. 7 is a schematic assembling diagram of a battery cell and a first protection piece according to some embodiments of this application;
FIG. 8 is a close-up view of a part B shown in FIG. 7;
FIG. 9 is a schematic diagram of a fit between a blocking portion and a pressure relief mechanism according to some embodiments of this application;
FIG. 10 is a cross-sectional view of sectioning along a C-C line shown in FIG. 9;
FIG. 11 is a schematic diagram of a fit between a blocking portion and a pressure relief mechanism according to some other embodiments of this application; and
FIG. 12 is a cross-sectional view of sectioning along a D-D line shown in FIG. 11.

The drawings are not drawn to scale.

List of reference numerals: 100-battery; 10-box; 11-first part; 12-second part; 20-battery cell assembly; 21-battery cell; 211-shell; 211a-housing; 211b-end cap; 212-electrode terminal; 213-pressure relief mechanism; 2131-fragile portion; 2132-flip axis; 214-electrode assembly; 215-first end; 216-second end; 30-end plate; 31-first protection piece; 311-blocking portion; 312-protection piece body; 3121-first positioning hole; 32-second protection piece; 200-controller; 300-motor; 1000-vehicle.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, unless otherwise expressly specified, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

The battery mentioned in this application means a unitary physical module that includes one or more battery cells to provide a higher voltage and a higher capacity. For example, the battery mentioned in this application may include a battery module, a battery pack, or the like.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application.

The battery may include a battery cell assembly and an end plate. The end plate is disposed on one side of the battery cell assembly. The battery cell assembly includes a plurality of battery cells. The plurality of battery cells are mounted on the end plate so that the plurality of battery cells are positioned. To ensure the connection between a battery cell to another battery cell or other components and enable the pressure relief mechanism to release pressure, the electrode terminal and the pressure relief mechanism are usually exposed on the end plate.

The emissions out of the battery cell mentioned in this application include but are not limited to: electrolyte solution, melted or split positive and negative electrode plates, fragments of the separator, reaction-induced high-temperature and high-pressure gases, flames, and the like.

The pressure relief mechanism on a battery cell plays an important role in battery safety. The internal pressure and heat can be released outward by actuating the pressure relief mechanism, thereby preventing explosion and fire of the battery cell.

The thermal runaway of a battery is caused by the fact that the heat generation rate of the battery is much higher than the heat dissipation rate, and that a large amount of heat is accumulated but not dissipated in time. For example, overcharging, overheating of the ambient temperature, battery deformation caused by impact, and an internal short circuit of the battery cell may cause thermal runaway of the battery.

The development of the battery technology needs to consider a plurality of design factors, including performance parameters such as energy density, discharge capacity, charge rate, and discharge rate, and also needs to consider safety of the battery.

In the related art, when the pressure relief mechanism and the electrode terminal are disposed at the same end (such as the first end) of the battery cell, the pressure relief mechanism is usually disconnected from the electrode terminal. If the pressure relief mechanism contacts the electrode terminal, an internal short circuit occurs in the battery cell. The inventor hereof finds that when the pressure relief mechanism is actuated by thermal runaway of a battery cell, the action of the pressure relief mechanism is prone to cause contact and an internal short circuit between the pressure relief mechanism and the electrode terminal, thereby posing safety hazards such as fire and explosion.

In view of this, in order to solve the problem that the pressure relief mechanism is in contact with the electrode terminal when actuated, a battery is hereby designed. The battery includes a battery cell and a first protection piece. The battery cell includes electrode terminals and a pressure relief mechanism. At least one of the electrode terminals and the pressure relief mechanism are disposed at a first end of the battery cell. The first protection piece is disposed at the first end. The first protection piece includes a blocking portion. The blocking portion is configured to prevent the pressure relief mechanism from contacting the electrode terminals when the pressure relief mechanism is actuated.

In such a battery, the blocking portion serves to prevent the pressure relief mechanism from contacting the electrode terminal. Therefore, when the pressure relief mechanism is actuated, the pressure relief mechanism is blocked by the blocking portion, thereby reducing the probability of contacting the electrode terminal, reducing the risk of contact and short-circuiting between the pressure relief mechanism and the electrode terminal, and in turn, improving the safety of the battery, and endowing the battery with relatively high safety.

The battery disclosed in an embodiment of this application is applicable to, but without being limited to use in, electrical devices such as a vehicle, watercraft, or aircraft. A power supply system of the electrical device may be formed of the battery disclosed herein.

An embodiment of this application provides an electrical device that uses a battery as a power supply. The electrical device may be, but is not limited to, mobile phone, tablet computer, laptop computer, electric toy, electric tool, electric bicycle, electric motorcycle, electric vehicle, ship, spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle is used as an example of the electrical device disclosed in an embodiment of this application.

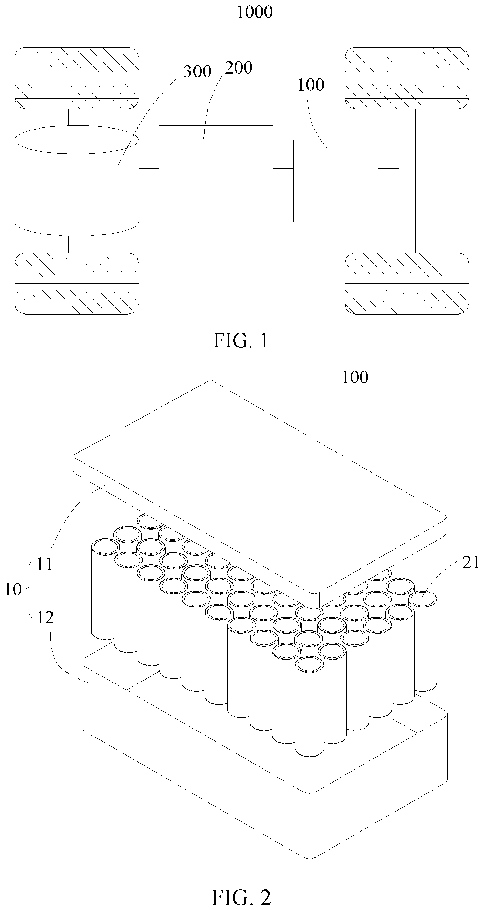

Referring to FIG. 1, FIG. 1 is a schematic structural diagram of a vehicle according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000 to power a circuit system of the vehicle 1000. For example, the battery may be configured to meet operating power usage requirements of the vehicle 1000 that is being started or navigated or running.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is a schematic exploded view of a battery according to some embodiments of this application. The battery 100 includes a box 10 and a battery cell 21. The battery cell 21 is accommodated in the box 10. The box 10 is configured to provide an accommodation space for the battery cell 21. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 21. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 21. The plurality of battery cells 21 may be connected in series, parallel, or series-and-parallel pattern. The series-and-parallel pattern means a combination of series connection and parallel connection of the plurality of battery cells 21. The plurality of battery cells 21 may be directly connected in series, parallel, or series-and-parallel pattern, and then the whole of the plurality of battery cells 21 may be accommodated in the box 10. Alternatively, to make up a battery 100, the plurality of battery cells 21 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 21.

Each battery cell 21 may be, but is not limited to, a secondary battery or primary battery; or, may be a lithium-sulfur battery, a sodium-ion battery, or a magnesium-ion battery.

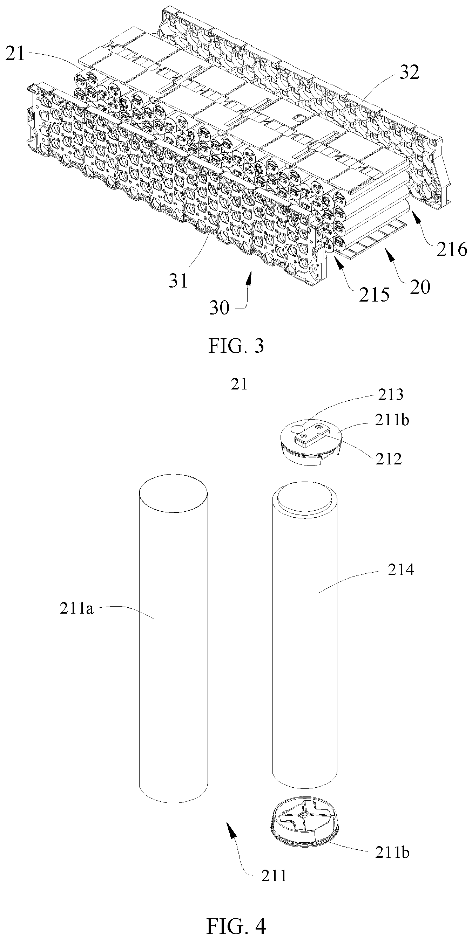

Referring to FIG. 3, FIG. 3 is a schematic structural diagram of a battery cell assembly according to some embodiments of this application. According to some embodiments of this application, the battery 100 may include a battery cell assembly 20 and an end plate 30. The battery cell assembly 20 includes a plurality of battery cells 21. The end plate 30 is disposed on one side of the battery cell assembly 20. The plurality of battery cells 21 are mounted on the end plate 30 so that the plurality of battery cells 21 are assembled in position.

Referring to FIG. 4, FIG. 4 is a schematic exploded view of a battery cell according to some embodiments of this application. The battery cell 21 is a minimum unit of a battery. As shown in FIG. 4, the battery cell 21 includes a shell 211, electrode terminals 212, a pressure relief mechanism 213, and an electrode assembly 214.

The shell 211 includes a housing 211a and an end cap 211b. An opening is created on the housing 211a. The end cap 211b caps off the opening of the housing 211a to isolate the internal environment of the battery cell 21 from the external environment. The electrode terminal 212 and the pressure relief mechanism 213 may be disposed on the end cap 211b; or, the electrode terminal 212 and the pressure relief mechanism 213 may be disposed on a first wall of the housing 211a, and the first wall is located at one end, oriented away from the opening, of the housing 211a; or, one electrode terminal 212 and the pressure relief mechanism 213 may be disposed on the end cap 211b, and the other electrode terminal 212 may be disposed on the first wall of the housing 211a.

The end cap 211b may be made of a variety of materials such as copper, iron, aluminum, stainless steel, aluminum alloy, or plastic, without being particularly limited herein. In some embodiments, an insulator may be further disposed on an inner side of the end cap 211b. The insulator may be configured to isolate an electrically connected component in the housing 211a from the end cap 211b to reduce short-circuit risks. For example, the insulator may be plastic, rubber, or the like.

The housing 211a and the end cap 211b may be stand-alone components. An opening may be created on the housing 211a. At the opening, the end cap 211b caps off the opening to form the internal environment of the battery cell 21. Without limitation, the end cap 211b and the housing 211a may be integrated instead. Specifically, the end cap 211b and the housing 211a may form a common connection face before other components are put into the housing. Subsequently, when the housing 211a needs to be sealed, the end cap 211b is made to cap off the housing 211a. The housing 211a may be made of a variety of materials such as copper, iron, aluminum, stainless steel, aluminum alloy, or plastic, without being particularly limited herein.

The electrode assembly 214 is a component in which electrochemical reactions occur in the battery cell 21. One or more electrode assemblies 214 may be contained in the housing 211a. The electrode assembly 214 is mainly formed by winding a positive electrode plate and a negative electrode plate. A separator is typically disposed between the positive electrode plate and the negative electrode plate. The separator is configured to isolate the positive electrode plate from the negative electrode plate to avoid an internal short circuit between the positive electrode plate and the negative electrode plate.

The electrode terminal 212 is electrically connected to the electrode assembly 214. The electrode terminal 212 is configured to output electrical energy of the battery cell 21.

The pressure relief mechanism 213 is configured to relieve the internal pressure and temperature of the battery cell 21.

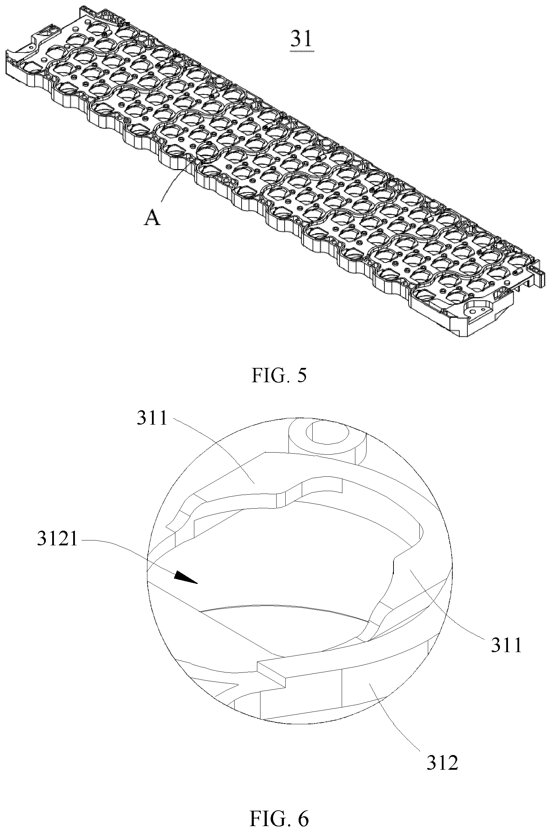

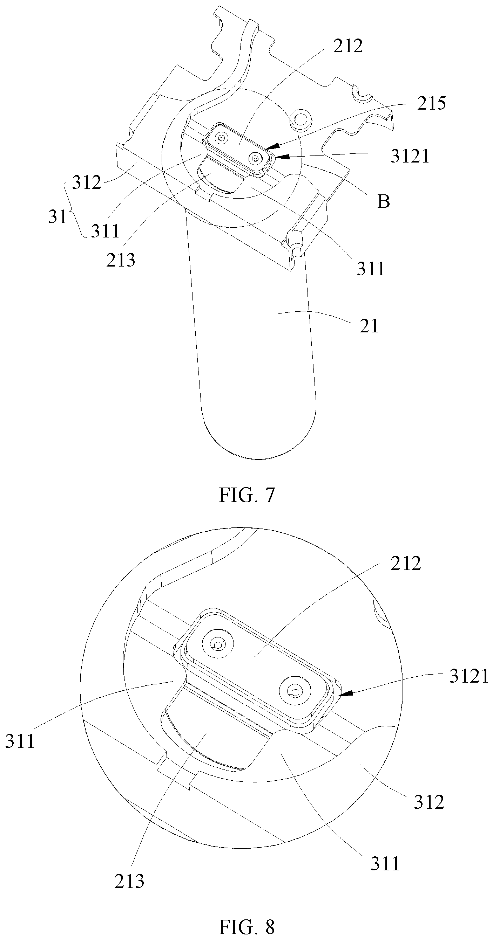

Referring to FIG. 5 to FIG. 8, FIG. 5 is a schematic structural diagram of a first protection piece according to some embodiments of this application; FIG. 6 is a close-up view of a part A shown in FIG. 5; FIG. 7 is a schematic assembling diagram of a battery cell and a first protection piece according to some embodiments of this application; and FIG. 8 is a close-up view of a part B shown in FIG. 7. According to some embodiments of this application, this application provides a battery 100. As shown in FIG. 5 to FIG. 8, the battery 100 includes a battery cell 21 and a first protection piece 31. The battery cell 21 includes electrode terminals 212 and a pressure relief mechanism 213. At least one of the electrode terminals 212 and the pressure relief mechanism 213 are disposed at a first end 215 of the battery cell 21. The first protection piece 31 is disposed at the first end 215. The first protection piece 31 includes a blocking portion 311. The blocking portion 311 is configured to prevent the pressure relief mechanism 213 from contacting the electrode terminals 212 when the pressure relief mechanism 213 is actuated.

The battery cell 21 includes two electrode terminals 212. The two electrode terminals 212 are a positive electrode terminal and a negative electrode terminal respectively. The positive electrode terminal and the negative electrode terminal may be located at the first end 215 of the battery cell 21, or, the positive electrode terminal and the negative electrode terminal may be located at two opposite ends of the battery cell 21 respectively.

That at least one electrode terminal 212 and the pressure relief mechanism 213 are disposed at the first end 215 of the battery cell 21 means that one electrode terminal 212 and the pressure relief mechanism 213 are disposed at the first end 215, or, two electrode terminals 212 and the pressure relief mechanism 213 are disposed at the first end 215.

The pressure relief mechanism 213 is a component or mechanism configured to relieve the internal pressure and temperature of the battery cell 21. The pressure relief mechanism 213 may be actuated when the internal pressure or temperature of the battery cell 21 reaches a threshold, or the pressure relief mechanism 213 may be actuated actively.

The pressure relief mechanism 213 means an element or component that is actuated to relieve the internal pressure or temperature when the internal pressure or temperature of the battery cell 21 reaches a threshold. The threshold varies depending on design requirements. The threshold may depend on the material of one or more of the positive electrode plate, the negative electrode plate, the electrolyte solution, or the separator in the battery cell 21. The pressure relief mechanism 213 may be in the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell 21 reaches the threshold, the pressure relief mechanism 213 performs an action or a fragile structure disposed in the pressure relief mechanism 213 is ruptured to form an opening or channel for relieving the internal pressure or temperature.

The term "actuated" mentioned in this application means that the pressure relief mechanism 213 performs an action or is activated to a given state so that the internal pressure and temperature of the battery cell 21 are relieved. The actions performed by the pressure relief mechanism 213 may include, but are not limited to rupturing, shattering, tearing, or bursting open at least a part of the pressure relief mechanism 213, or the like. When the pressure relief mechanism 213 is actuated, high-temperature and high-pressure substances inside the battery cell 21 are expelled as emissions out of the actuated position. In this way, the pressure and temperature of the battery cell 21 are relieved under a circumstance of a controllable pressure or temperature to avoid potential severer accidents.

That the first protection piece 31 is disposed at the first end 215 means that the first protection piece 31 sleeved around the battery cell 21, or, the first protection piece 31 is bonded to an end face of the first end 215.
When the battery 100 includes a plurality of battery cells 21, the first protection piece 31 may correspond to the plurality of battery cells 21. To be specific, the first protection piece 31 may be an end plate 30, and the plurality of battery cells 21 are mounted on the first protection piece 31; or, a plurality of first protection pieces 31 are disposed, and the plurality of first protection pieces 31 are disposed corresponding to the plurality of battery cells 21 respectively.

In the battery 100 according to an embodiment of this application, the blocking portion 311 serves to prevent the pressure relief mechanism 213 from contacting the electrode terminal 212. Therefore, when the pressure relief mechanism 213 is actuated, the pressure relief mechanism 213 is blocked by the blocking portion 311, thereby reducing the probability of contacting the electrode terminal 212, reducing the risk of contact and short-circuiting between the pressure relief mechanism 213 and the electrode terminal 212, and in turn, improving the safety of the battery 100, and endowing the battery 100 with relatively high safety.

According to some embodiments of this application, as shown in FIG. 6 and FIG. 7, the first protection piece 31 includes a protection piece body 312. A first positioning hole 3121 is created on the protection piece body 312. The first end 215 is inserted into the first positioning hole 3121. The blocking portion 311 is disposed at the first positioning hole 3121.

The first positioning hole 3121 is a hole created on the protection piece body 312. The first end 215 is inserted into the first positioning hole 3121. The first positioning hole 3121 may be a through-hole so as to expose the electrode terminal 212 and the pressure relief mechanism 213.

One blocking portion 311 or a plurality of blocking portions 311 may be disposed at the first positioning hole 3121.

In the above technical solution, the first end 215 is inserted into the first positioning hole 3121. The blocking portion 311 is disposed at the first positioning hole 3121, thereby facilitating the assembling and positioning of the first protection piece 31 and the battery cell 21, and ensuring that the blocking portion 311 blocks the pressure relief mechanism 213 from contacting the electrode terminal 212.

According to some embodiments of this application, the pressure relief mechanism 213 is configured to flip over when an internal pressure or internal temperature of the battery cell 21 reaches a threshold. The blocking portion 311 is configured to limit a flipping angle of the pressure relief mechanism 213.

The pressure relief mechanism 213 is configured to flip over when the internal pressure or temperature of the battery cell 21 reaches the threshold. By flipping over the pressure relief mechanism 213, the pressure relief mechanism 213 is actuated. The pressure relief mechanism 213 may be disposed on a valve disc on the end cap 211b. The valve disc may be welded to the end cap 211b, or the valve disc and the end cap 211b may be formed in one piece.

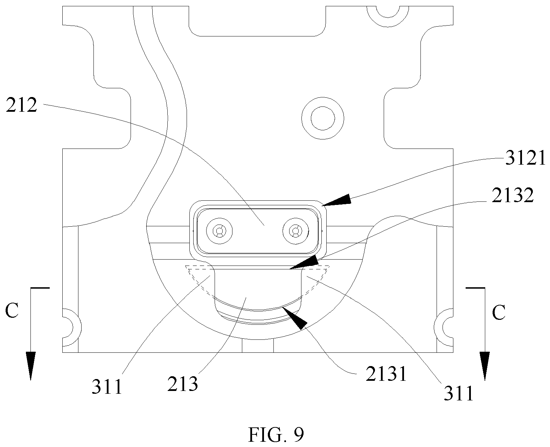

Referring to FIG. 9, FIG. 9 is a schematic diagram of a fit between a blocking portion and a pressure relief mechanism according to some embodiments of this application. In some embodiments, as shown in FIG. 9, a fragile portion 2131 may be disposed on the pressure relief mechanism 213. When the internal pressure or temperature of the battery cell 21 reaches the threshold, the fragile portion 2131 is torn up. Under the action of the internal pressure of the battery cell 21, the torn part of the pressure relief mechanism 213 flips relative to the untorn part of the pressure relief mechanism 213, thereby releasing the internal pressure and temperature.

The pressure relief mechanism 213 is actuated by flipping. The blocking portion 311 is located on a flipping path of the pressure relief mechanism 213, thereby being able to limit the flipping angle of the pressure relief mechanism 213, and in turn, reducing the risk of contact and short-circuiting between the pressure relief mechanism 213 and the electrode terminal 212.

It is hereby noted that the fragile portion 2131 of the pressure relief mechanism 213 may be a relatively thin region of the pressure relief mechanism 213. This region is thinner than other regions. When the battery cell 21 is thermally runaway, the fragile portion 2131 is easily torn up. For example, the fragile portion 2131 may be in various forms. The fragile portion 2131 may be a nick carved on the pressure relief mechanism 213, or the fragile portion 2131 may be a relatively thin region on the pressure relief mechanism during the formation of the pressure relief mechanism 213. The fragile portion 2131 may be in various shapes, such as a straight line, an arc, or a special shape.

According to some embodiments of this application, as shown in FIG. 6, FIG. 8, and FIG. 9, two blocking portions 311 are disposed at the first positioning hole 3121. The two blocking portions 311 are spaced apart along a flip axis 2132 of the pressure relief mechanism 213.

With the two blocking portions 311 being spaced apart along the flip axis 2132 of the pressure relief mechanism 213, and, with a clearance left between the two blocking portions 311, the emissions expelled through the pressure relief mechanism 213 can pass through the clearance when the pressure relief mechanism 213 is actuated, and the emissions is less obstructed.

In the above technical solution, two blocking portions 311 are disposed at the first positioning hole 3121 to block the pressure relief mechanism 213 at different positions, thereby producing a good blocking effect. In addition, the two blocking portions 311 may be made relatively small in size to lessen the degree of obstructing the emissions of the pressure relief mechanism 213 while ensuring a good blocking effect, thereby facilitating the pressure relief mechanism to release pressure 213.

According to some embodiments of this application, as shown in FIG. 6, the blocking portion 311 protrudes beyond a hole wall of the first positioning hole 3121.

That the blocking portion 311 protrudes beyond a hole wall of the first positioning hole 3121 means that the blocking portion 311 is connected to the hole wall of the first positioning hole 3121, or the blocking portion 311 is located outside the first positioning hole 3121, as long as the projection of the blocking portion 311 on the battery cell 21 along the axial direction of the first positioning hole 3121 lies in the first positioning hole 3121.

In the above technical solution, the blocking portion 311 protrudes beyond the hole wall of the first positioning hole 3121, thereby making it convenient to block the pressure relief mechanism 213 and saving the assembling space.

According to some embodiments of this application, as shown in FIG. 4 to FIG. 7, the battery 100 includes a plurality of battery cells 21. A plurality of first positioning holes 3121 are created on the protection piece body 312. The plurality of first positioning holes 3121 correspond to the plurality of battery cells 21. The first end 215 of each battery cell 21 is inserted into a corresponding first positioning hole 3121.

With a plurality of first positioning holes 3121 created on the protection piece body 312, and, with a plurality of battery cells 21 mounted on the protection piece body 312, the plurality of battery cells 21 constitute a battery cell 21 assembly. The first protection piece 31 may be an end plate 30 located on one side of the battery cell 21 assembly. The first protection piece 31 serves to constrain the positions of the plurality of battery cells 21 to ensure structural compactness of the battery cell 21 assembly.

In the above technical solution, the protection piece body 312 corresponds to a plurality of battery cells 21, thereby making the structure compact, and facilitating assembling and positioning of the plurality of battery cells 21.

According to some embodiments of this application, the blocking portion 311 and the protection piece body 312 are formed in one piece.

The blocking portion 311 may be made of an insulating material. The blocking portion 311 and the protection piece body 312 may be formed in one piece by injection molding.

In the above technical solution, the blocking portion 311 and the protection piece body 312 are formed in one piece, thereby facilitating processing and ensuring sufficient strength of connection between the blocking portion 311 and the protection piece body 312.

According to other embodiments of this application, the blocking portion 311 and the protection piece body 312 may be molded separately but fixed in one piece. For example, the blocking portion 311 is bonded, snap-fastened, threadedly connected, or otherwise attached to the protection piece body 312.

According to some embodiments of this application, as shown in FIG. 7 and FIG. 9, along the axial direction of the first positioning hole 3121, a projection of the blocking portion 311 on the battery cell 21 at least partially overlaps the pressure relief mechanism 213.

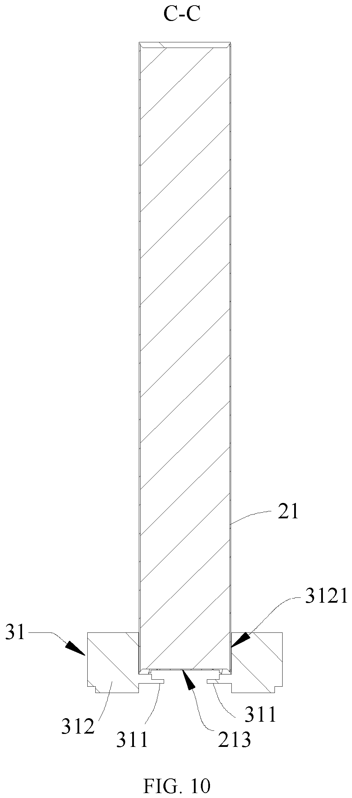

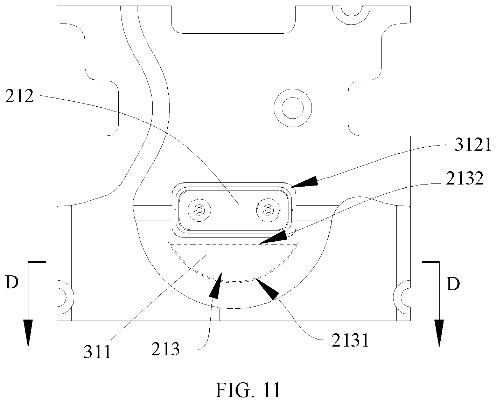

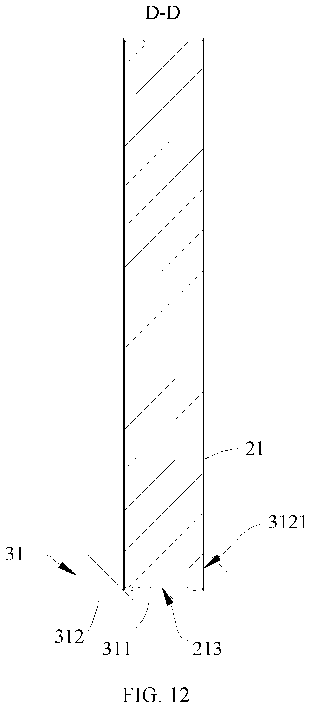

Referring to FIG. 10 to FIG. 12, FIG. 10 is a cross-sectional view of sectioning along a C-C line shown in FIG. 9; FIG. 11 is a schematic diagram of a fit between a blocking portion and a pressure relief mechanism according to some other embodiments of this application; and FIG. 12 is a cross-sectional view of sectioning along a D-D line shown in FIG. 11.

That the projection of the blocking portion 311 on the battery cell 21 at least partially overlaps the pressure relief mechanism 213 means: (i) the projection of the blocking portion 311 on the battery cell 21 partially overlaps the pressure relief mechanism 213, as shown in FIG. 9 and FIG. 10; or, (ii) the projection of the blocking portion 311 on the battery cell 21 fully overlaps the pressure relief mechanism 213, as shown in FIG. 11 and FIG. 12. It is hereby noted that, although the projection of the blocking portion 311 on the battery cell 21 overlaps the pressure relief mechanism 213, the blocking portion 311 does not prevent the pressure relief mechanism 213 from relieving the internal pressure and temperature of the battery cell 21.

In the above technical solution, the projection of the blocking portion 311 at least partially overlaps the pressure relief mechanism 213, so as to ensure that the blocking portion 311 can block the pressure relief mechanism 213 from contacting the electrode terminal 212.

According to some embodiments of this application, as shown in FIG. 10 and FIG. 12, along the axial direction of the first positioning hole 3121, a clearance exists between the blocking portion 311 and the pressure relief mechanism 213.

Because a clearance exists between the blocking portion 311 and the pressure relief mechanism 213, after the pressure relief mechanism 213 is actuated, a space is available for action of the pressure relief mechanism 213, thereby ensuring a sufficient space for passing the emissions of the pressure relief mechanism 213, and facilitating the pressure relief mechanism 213 to release pressure.

According to some embodiments of this application, as shown in FIG. 9 and FIG. 11, along the axial direction of the first positioning hole 3121, the projection of the blocking portion 311 on the battery cell 21 does not overlap the electrode terminal 212.

The projection of the blocking portion 311 on the battery cell 21 does not overlap the electrode terminal 212, thereby preventing the blocking portion 311 from blocking the electrode terminal 212, and making it convenient to electrically connect the electrode terminal 212 to other components (for example, a busbar component configured to connect two adjacent electrode terminals 212).

According to some embodiments of this application, as shown in FIG. 3, the battery 100 further includes a second protection piece 32. The second protection piece 32 is disposed at a second end 216, opposite to the first end 215, of the battery cell 21.

The battery cell 21 includes a second end 216 opposite to the first end 215. An electrode terminal 212 may be disposed at the second end 216. In this case, the polarity of the electrode terminal 212 disposed at the second end 216 may be the same as or different from that of the electrode terminal 212 disposed at the first end 215. In addition, a pressure relief mechanism 213 may be disposed at the second end 216.

The structure of the second protection piece 32 may be the same as that of the first protection piece 31 to facilitate mass production.

In the above technical solution, the second protection piece 32 is disposed at the second end 216. In other words, the second protection piece 32 is disposed opposite to the first protection piece 31. The two protection pieces constrain the position of the battery cell 21 from two opposite ends of the battery cell 21.

According to some embodiments of this application, a plurality of second positioning holes (not shown in the drawing) are created on the second protection piece 32. The plurality of second positioning holes correspond to the plurality of battery cells 21. The second end 216 of each battery cell 21 is inserted into the corresponding second positioning hole. When the pressure relief mechanism 213 is also disposed at the second end 216 of the battery cell 21, a blocking portion 311 is also disposed at the second positioning hole. The structure of the second protection piece 32 may be the same as that of the first protection piece 31.

According to some embodiments of this application, the battery cell 21 is cylindrical.

When the battery cell 21 is cylindrical, the electrode assembly 214 of the battery cell 21 may be a jelly-roll structure. The structure of the battery cell 21 is relatively compact. At the first end 215, the distance between the electrode terminal 212 and the pressure relief mechanism 213 is relatively short. The blocking portion 311 occupies just a relatively small mounting space, thereby ensuring a compact structure of the battery 100.

According to some embodiments of this application, this application further provides an electrical device. The electrical device includes the battery 100 disclosed in any one of the above technical solutions, and the battery 100 is configured to provide electrical energy for the electrical device.

The electrical device may be any device or system described above in which the battery 100 is applied.

According to some embodiments of this application, referring to FIG. 3 to FIG. 12, this application provides a battery cell 100. The battery cell 100 includes a battery cell 21 assembly, a first protection piece 31, and a second protection piece 32. The battery cell 21 assembly includes a plurality of battery cells 21. Each battery cell 21 includes an electrode terminal 212 and a pressure relief mechanism 213. The electrode terminal 212 and the pressure relief mechanism 213 are disposed at a first end 215 of the battery cell 21. The first protection piece 31 and the second protection piece 32 are located on two sides of the battery cell 21 assembly respectively. The first protection piece 31 is disposed at the first end 215, and the second protection piece 32 is disposed at the second end 216 of the battery cell 21. The second end 216 is disposed opposite to the first end 215. The first protection piece 31 includes a protection piece body 312 and a blocking portion 311. A plurality of first positioning holes 3121 are created on the protection piece body 312. The plurality of first positioning holes 3121 correspond to the plurality of battery cells 21. The first end 215 of each battery cell 21 is inserted into a corresponding first positioning hole 3121. The blocking portion 311 is disposed at the first positioning hole 3121. The blocking portion 311 is configured to prevent the pressure relief mechanism 213 from contacting the electrode terminal 212 when the pressure relief mechanism 213 is actuated. The blocking portion 311 serves to prevent the pressure relief mechanism 213 from contacting the electrode terminal 212, thereby reducing the risk of contact and short-circuiting between the pressure relief mechanism 213 and the electrode terminal 212, and in turn, endowing the battery 100 with relatively high safety.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery, **characterized in that** the battery comprises:
a battery cell, wherein the battery cell comprises electrode terminals and a pressure relief mechanism, and at least one of the electrode terminals and the pressure relief mechanism are disposed at a first end of the battery cell; and
a first protection piece, disposed at the first end, wherein the first protection piece comprises a blocking portion, and the blocking portion is configured to prevent the pressure relief mechanism from contacting the electrode terminals when the pressure relief mechanism is actuated.

2. The battery according to claim 1, **characterized in that** the first protection piece comprises a protection piece body, a first positioning hole is created on the protection piece body, the first end is inserted into the first positioning hole, and the blocking portion is disposed at the first positioning hole.

3. The battery according to claim 2, **characterized in that**, the pressure relief mechanism is configured to flip over when an internal pressure or internal temperature of the battery cell reaches a threshold, and the blocking portion is configured to limit a flipping angle of the pressure relief mechanism.

4. The battery according to claim 3, **characterized in that** two blocking portions are disposed at the first positioning hole, and the two blocking portions are spaced apart along a flip axis of the pressure relief mechanism.

5. The battery according to any one of claims 2 to 4, **characterized in that** the blocking portion protrudes beyond a hole wall of the first positioning hole.

6. The battery according to any one of claims 2 to 5, **characterized in that** the battery comprises a plurality of battery cells, a plurality of first positioning holes are created on the protection piece body, the plurality of first positioning holes correspond to the plurality of battery cells, and the first end of each battery cell is inserted into a corresponding first positioning hole.

7. The battery according to any one of claims 2 to 6, **characterized in that** the blocking portion and the protection piece body are formed in one piece.

8. The battery according to any one of claims 2 to 7, **characterized in that**, along an axial direction of the first positioning hole, a projection of the blocking portion on the battery cell at least partially overlaps the pressure relief mechanism.

9. The battery according to any one of claims 2 to 8, **characterized in that**, along an axial direction of the first positioning hole, a clearance exists between the blocking portion and the pressure relief mechanism.

10. The battery according to any one of claims 2 to 9, **characterized in that**, along an axial direction of the first positioning hole, a projection of the blocking portion on the battery cell does not overlap the electrode terminal.

11. The battery according to any one of claims 1 to 10, **characterized in that** the battery further comprises a second protection piece, and the second protection piece is disposed at a second end, opposite to the first end, of the battery cell.

12. The battery according to any one of claims 1 to 11, **characterized in that** the battery cell is cylindrical.

13. An electrical device, **characterized in that** the electrical device comprises the battery according to any one of claims 1 to 12.
